# EUROPÄISCHE PATENTANMELDUNG

(11) **EP 2 725 437 A1**
(43) Veröffentlichungstag der Anmeldung: **30.04.2014**
(21) Anmeldenummer: 13004432.4
(22) Anmeldetag: 11.09.2013
(51) Int. Cl.: G05B 19/042, G06F 9/44

(54) **Bedieneinheit mit Applikationen zur Bedienung von Produktionsanlagen**

(30) Priorität: 20.09.2012 CH 17072012
(71) Anmelder: Ferag AG, 8340 Hinwil (CH)
(72) Erfinder: Schüepp, Michael, 8303 Illnau (CH)
(74) Vertreter: Rentsch Partner AG

(57) **Zusammenfassung**

Die Erfindung betrifft eine Bedieneinheit (1) mit einer oder mehreren Applikationen (121, 122) zur Bedienung mindestens einer Produktionsanlage (2). Ein Konfigurationsdatenspeicher (13) ist eingerichtet, Konfigurationsdaten abzuspeichern, welche für die Konfiguration der einen oder mehreren Applikationen (121, 122) der Bedieneinheit (1) vorgesehen sind. Ein Synchronisationsmodul (14) ist eingerichtet, auf im Konfigurationsdatenspeicher (13) abgespeicherte Konfigurationsdaten zuzugreifen und diese über eine Kommünikationsschnittstelle (11) der Bedieneinheit (1) mit Konfigurationsdaten zu synchronisieren, welche in einem Konfigurationsdatenspeicher (13', 13") einer örtlich entfernt angeordneten Bedieneinheit (1', 1") abgespeichert sind. Ein Konfigurationszugriffsmodul (15) ist eingerichtet, von mindestens einer Applikation (121, 122) der Bedieneinheit (1) eine Leseanfrage für abgespeicherte Konfigurationsdaten entgegenzunehmen, auf abgespeicherte Konfigurationsdaten zuzugreifen und die der Leseanfrage entsprechenden abgespeicherten Konfigurationsdaten zu lesen und zur Konfiguration der mindestens einen Applikation (121, 122) die gelesenen Konfigurationsdaten an die mindestens eine Applikation (121, 1 22) zu übergeben.

## Beschreibung

### TECHNISCHES GEBIET

Die Erfindung bezieht sich auf eine Bedieneinheit mit einer oder mehreren Applikationen zur Bedienung mindestens einer Produktionsanlage und auf ein Verfahren zum Betreiben einer Bedieneinheit mit einer oder mehreren Applikationen zur Bedienung mindestens einer Produktionsanlage.

### STAND DER TECHNIK

Aus dem Stand der Technik sind Produktionsanlagen wie beispielsweise Produktverarbeitungsanlagen oder Druckproduktverarbeitungsanlagen bekannt. Dies sind hochkomplexe und weitläufige Anlagen, die je nach Anwendung in sehr grossen Bauten, oftmals in mehreren Gebäuden und Räumen, angeordnet sind. Das Bedienen von Produktionsanlagen erfolgt durch mindestens einen Benutzer und mindestens einer Bedieneinheit. Ein Benutzer kann beispielsweise je nach Standort unterschiedliche Bedieneinheiten benutzen, um die Produktionsanlage zu bedienen. Zum Bedienen der Produktionsanlage müssen die Bedieneinheiten entsprechend der Produktionsanlage konfiguriert werden. Beispielsweise nachdem die Produktionsanlage mit einem neuen Maschinenteil ausgerüstet wurde, müssen die Bedieneinheiten für das Bedienen dieses Maschinenteils eingerichtet werden. Beispielsweise eine Applikation der Bedieneinheit wird mit Konfigurationsdaten so konfiguriert, dass mit den Bedieneinheiten der Maschinenteil gestartet, gestoppt, die Geschwindigkeit, etc. eingestellt werden kann. Bei einer grossen Anzahl Bedieneinheiten erfordert dies einen hohen Aufwand, die entsprechenden Bedieneinheiten zu konfigurieren. Beim Bedienen der Produktionsanlage nehmen einer oder mehrere Benutzer beispielsweise an einer oder mehreren Bedieneinheiten persönliche Benutzereinstellungen vor, welche dann allerdings beim Bedienen mit einer anderen Bedieneinheit nicht automatisch zur Verfügung stehen.

### DARSTELLUNG DER ERFINDUNG

Es ist eine Aufgabe der vorliegenden Erfindung eine Bedieneinheit und ein Verfahren zum Betreiben einer Bedieneinheit mit einer oder mehreren Applikationen zur Bedienung mindestens einer Produktionsanlage vorzuschlagen, welche zumindest gewisse Nachteile des Standes der Technik vermeiden oder reduzieren. Es ist insbesondere eine Aufgabe der vorliegenden Erfindung eine Bedieneinheit und ein Verfahren zum Betreiben einer Bedieneinheit mit einer oder mehreren Applikationen zur Bedienung mindestens einer Produktionsanlage vorzuschlagen, welche in einem Verbund von mehreren Bedieneinheiten für die Produktionsanlage zu einer konsistenten Konfiguration der Bedieneinheiten führen. Es ist insbesondere eine Aufgabe der vorliegenden Erfindung eine Bedieneinheit und ein Verfahren zum Betreiben einer Bedieneinheit mit einer oder mehreren Applikationen zur Bedienung mindestens einer Produktionsanlage vorzuschlagen, welche bei einem Unterbruch oder Ausfall von Kommunikationseinrichtungen zum Bedienen der mindestens einen Produktionsanlage weiter verwendbar sind, wobei in einem Verbund von Bedieneinheiten nach der erneuten Verfügbarkeit der Kommunikationseinrichtungen die an den Bedieneinheiten vorgenommenen Konfigurationsänderungen für alle Bedieneinheiten verfügbar sind.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Eine Bedieneinheit mit einer oder mehreren Applikationen zur Bedienung mindestens einer Produktionsanlage umfasst: einen Konfigurationsdatenspeicher welcher eingerichtet ist, Konfigurationsdaten abzuspeichern, welche für die Konfiguration der einen oder mehreren Applikationen der Bedieneinheit vorgesehen sind; ein Synchronisationsmodul welches eingerichtet ist, auf im Konfigurationsdatenspeicher abgespeicherte Konfigurationsdaten zuzugreifen und diese über eine Kommunikationsschnittstelle der Bedieneinheit mit Konfigurationsdaten zu synchronisieren, welche in einem Konfigurationsdatenspeicher einer örtlich entfernt angeordneten Bedieneinheit abgespeichert sind; und ein Konfigurationszugriffsmodul welches eingerichtet ist, von mindestens einer Applikation der Bedieneinheit eine Leseanfrage für abgespeicherte Konfigurationsdaten entgegenzunehmen, auf abgespeicherte Konfigurationsdaten zuzugreifen und die der Leseanfrage entsprechenden abgespeicherten Konfigurationsdaten zu lesen und zur Konfiguration der mindestens einen Applikation die gelesenen Konfigurationsdaten an die mindestens eine Applikation zu übergeben. Durch das Synchronisationsmodul werden die abgespeicherten Konfigurationsdaten bei verfügbaren Kommunikationsverbindungen zu örtlich entfernt angeordneten Bedieneinheiten synchronisiert. Die Bedieneinheiten können stationäre Bedieneinheiten und/oder mobile Bedieneinheiten umfassen. Die eine oder mehreren Applikationen der Bedieneinheit wird aufgrund der abgespeicherten Konfigurationsdaten konfiguriert. Das Konfigurieren der Applikationen kann beim Aufstarten, beim Installieren, oder zu irgendeinem anderen Zeitpunkt erfolgen. Da die abgespeicherten Konfigurationsdaten für die Bedieneinheiten synchronisiert sind, ist in einem Verbund von Bedieneinheiten jede Bedieneinheit in derselben Weise für das Bedienen der mindestens einen Produktionsanlage eingerichtet. Die eine oder mehreren Applikationen der Bedieneinheit sind vorgesehen, um Steuer- oder Regelungsaufgaben bei verschiedenen Maschinenteilen oder Komponenten einer oder mehrerer Produktionsanlagen wahrzunehmen.

In einer Ausführungsform ist das Konfigurationszugriffsmodul eingerichtet, von mindestens einer Applikation eine Änderungsanfrage betreffend abgespeicherte Konfigurationsdaten entgegenzunehmen und auf abgespeicherte Konfigurationsdaten zuzugreifen und diese entsprechend der Änderungsanfrage zu ändern sowie einen Quittierbeleg über das Ändern der abgespeicherten Konfigurationsdaten an die mindestens eine Applikation zu übergeben. In einem Verbund mit mehreren Bedieneinheiten kann an jeder Bedieneinheit für eine betreffende Applikation eine Konfigurationsänderung vorgenommen werden. Da die abgespeicherten Konfigurationsdaten zwischen den Bedieneinheiten synchronisiert sind, stehen solche Änderungen allen Bedieneinheiten aus dem Verbund von Bedieneinheiten zur Verfügung.

In einer Ausführungsform umfasst die Bedieneinheit weiter ein Überprüfungsmodul welches eingerichtet ist, beim Zugriff auf abgespeicherte Konfigurationsdaten mit dem Konfigurationszugriffsmodul und dem Synchronisationsmodul zusammenzuwirken, wobei durch das Überprüfungsmodul eines oder mehrere der folgenden Ereignisse detektiert und abgefangen werden: zeitgleicher Zugriff auf abgespeicherte Konfigurationsdaten durch das Konfigurationszugriffsmodul und durch das Synchronisationsmodul, fehlerhaftes Lesen und/oder fehlerhaftes Ändern von abgespeicherten Konfigurationsdaten, beispielsweise aufgrund einer fehlerhaften Leseanfrage und/oder Änderungsanfrage. Durch das Überprüfungsmodul wird insbesondere sichergestellt, dass nicht gleichzeitig Änderungen durch das Synchronisieren der Konfigurationsdaten und durch die Applikationen der Bedieneinheit vorgenommen wird. Bei einer fehlerhaften Leseanfrage und/oder Änderungsanfrage wird sichergestellt, dass einer Applikation keine fehlerhaften Konfigurationsdaten übergeben werden und/oder dass beim Ändern von Konfigurationsdaten keine fehlerhafte abgespeicherte Konfigurationsdaten entstehen.

In einer Ausführungsform umfasst die Bedieneinheit ein Master-Slavemodul welches eingerichtet ist, die Bedieneinheit als Master oder als Slave zu definieren, wobei das Synchronisationsmodul eingerichtet ist, im Falle einer als Master definierten Bedieneinheit die Synchronisation von Konfigurationsdaten ausschliesslich mit einer als Slave definierten örtlich entfernt angeordneten Bedieneinheit durchzuführen und im Falle einer als Slave definierten Bedieneinheit die Synchronisation von Konfigurationsdaten ausschliesslich mit einer als Master definierten örtlich entfernt angeordneten Bedieneinheit durchzuführen. In einem Verbund mit mehreren Bedieneinheiten ist insbesondere genau eine Bedieneinheit als Master definiert. Die Synchronisation von Konfigurationsdaten erfolgt ausschliesslich von einem Slave an einen Master oder vom Master an alle Slaves. Dadurch werden die Konfigurationsdaten über alle Bedieneinheiten synchron gehalten.

In einer Ausführungsform ist das Konfigurationszugriffsmodul eingerichtet, beim Zugriff auf abgespeicherte Konfigurationsdaten zu überprüfen, ob der Zugriff den Konfigurationsdatenspeicher der Bedieneinheit oder einen Konfigurationsdatenspeicher einer örtlich entfernt angeordneten Bedieneinheit betrifft und den Zugriff auf abgespeicherte Konfigurationsdaten entsprechend im Konfigurationsdatenspeicher der Bedieneinheit oder in einem Konfigurationsdatenspeicher einer örtlich entfernt angeordneten Bedieneinheit durchzuführen. Für bestimmte Bedieneinheiten kann festgelegt werden, dass nur ein erster Teil der Konfigurationsdaten auf diesen bestimmten Bedieneinheiten abgespeichert sind und ein zweiter Teil Konfigurationsdaten auf irgendeiner anderen Bedieneinheit des Verbunds mit mehreren Bedieneinheiten abgespeichert sind, insbesondere auf einer als Master konfigurierten Bedieneinheit. Dadurch können auch Bedieneinheiten mit einer geringen Speicherkapazität in den Verbund mit mehreren Bedieneinheiten aufgenommen werden. Der erste Teil der Konfigurationsdaten bezieht sich insbesondere auf Konfigurationsdaten, welche auch bei einem Ausfall von Kommunikationsverbindungen für die Applikationen der Bedieneinheit zur Verfügung stehen müssen.

In einer Ausführungsform ist das Synchronisationsmodul eingerichtet, zur Initialisierung des Konfigurationsdatenspeichers der Bedieneinheit von einem Konfigurationsdatenspeicher einer örtlich entfernt angeordneten Bedieneinheit abgespeicherte Konfigurationsdaten zu kopieren. Wird eine Bedieneinheit einem Verbund mit Bedieneinheiten neu hinzugefügt, lässt sich diese Bedieneinheit schnell konfigurieren und für das Bedienen der mindestens einen Produktionsanlage bereitstellen.

In einer Ausführungsform ist das Konfigurationsdatenzugriffsmodul eingerichtet, beim Ändern von abgespeicherten Konfigurationsdaten, welche das Löschen und/oder Modifizieren von abgespeicherten Konfigurationsdaten betrifft, eine Löschtabelle und/oder Modifikationstabelle nachzuführen, wobei das Synchronisationsmodul eingerichtet ist, eine Synchronisation von abgespeicherten Konfigurationsdaten unter Berücksichtigung der Löschtabelle und/oder der Modifikationstabelle durchzuführen. Bei einem vorübergehenden Ausfall von Kommunikationsverbindungen werden die bei einer Bedieneinheit vorgenommen Änderungen der Konfigurationsdaten in der Löschtabelle und/oder Modifikationstabelle geführt. Nachdem die Kommunikationsverbindungen wieder verfügbar sind, können diese Änderungen konsistent mit den weiteren Bedieneinheiten des Verbunds aus mehreren Bedieneinheiten synchronisiert werden.

Neben einer Bedieneinheit mit einer oder mehreren Applikationen zur Bedienung mindestens einer Produktionsanlage bezieht sich die Erfindung auf ein Verfahren zum Betreiben einer Bedieneinheit mit einer oder mehreren Applikationen zur Bedienung mindestens einer Produktionsanlage. Das Verfahren zum Betreiben einer Bedieneinheit mit einer oder mehreren Applikationen zur Bedienung mindestens einer Produktionsanlage umfasst: Abspeichern von Konfigurationsdaten in einem Konfigurationsdatenspeicher der Bedieneinheit, wobei die Konfigurationsdaten für die Konfiguration der einen oder mehreren Applikationen der Bedieneinheit vorgesehen sind; Zugreifen auf im Konfigurationsdatenspeicher der Bedieneinheit abgespeicherte Konfigurationsdaten und Synchronisieren dieser Konfigurationsdaten über eine Kommunikationsschnittstelle der Bedieneinheit mit Konfigurationsdaten, welche in einem Konfigurationsdatenspeicher einer örtlich entfernt angeordneten Bedieneinheit abgespeichert sind; und Entgegennehmen, von mindestens einer Applikation der Bedieneinheit, einer Leseanfrage für abgespeicherte Konfigurationsdaten, Zugreifen auf abgespeicherte Konfigurationsdaten, um der Leseanfrage entsprechende abgespeicherte Konfigurationsdaten zu lesen und Übergeben von gelesenen Konfigurationsdaten an die mindestens eine Applikation der Bedieneinheit zur Konfiguration der mindestens einen Applikation.

In einer Variante wird von mindestens einer Applikation eine Änderungsanfrage betreffend abgespeicherte Konfigurationsdaten entgegengenommen und auf abgespeicherte Konfigurationsdaten zugegriffen, um diese entsprechend der Änderungsanfrage zu ändern. Es wird einen Quittierbeleg über das Ändern der abgespeicherten Konfigurationsdaten an die mindestens eine Applikation übergeben.

In einer Variante werden beim Zugriff auf abgespeicherte Konfigurationsdaten eines oder mehrere der folgenden Ereignisse detektiert und abgefangen: zeitgleicher Zugriff auf abgespeicherte Konfigurationsdaten, fehlerhaftes Lesen und/oder fehlerhaftes Ändern von abgespeicherten Konfigurationsdaten, beispielsweise aufgrund einer fehlerhaften Leseanfrage und/oder Änderungsanfrage.

In einer Variante wird die Bedieneinheit als Master oder als Slave definiert, wobei im Falle einer als Master definierten Bedieneinheit die Synchronisation von Konfigurationsdaten ausschliesslich mit einer als Slave definierten örtlich entfernt angeordneten Bedieneinheit durchgeführt wird und im Falle einer als Slave definierten Bedieneinheit die Synchronisation von Konfigurationsdaten ausschliesslich mit einer als Master definierten örtlich entfernt angeordneten Bedieneinheit durchgeführt wird.

In einer Variante wird beim Zugriff auf abgespeicherte Konfigurationsdaten überprüft, ob der Zugriff den Konfigurationsdatenspeicher der Bedieneinheit oder einen Konfigurationsdatenspeicher einer örtlich entfernt angeordneten Bedieneinheit betrifft und der Zugriff auf abgespeicherte Konfigurationsdaten wird entsprechend im Konfigurationsdatenspeicher der Bedieneinheit oder in einem Konfigurationsdatenspeicher einer örtlich entfernt angeordneten Bedieneinheit durchgeführt.

In einer Variante werden zur Initialisierung des Konfigurationsdatenspeichers der Bedieneinheit von einem Konfigurationsdatenspeicher einer örtlich entfernt angeordneten Bedieneinheit abgespeicherte Konfigurationsdaten kopiert.

In einer Variante wird beim Ändern von abgespeicherten Konfigurationsdaten, welche das Löschen und/oder Modifizieren von abgespeicherten Konfigurationsdaten betrifft, eine Löschtabelle und/oder Modifikationstabelle nachgeführt und eine Synchronisation von abgespeicherten Konfigurationsdaten wird unter Berücksichtigung der Löschtabelle und/oder der Modifikationstabelle durchgeführt.

Neben einer Bedieneinheit und einem Verfahren Betreiben einer Bedieneinheit mit einer oder mehreren Applikationen zur Bedienung mindestens einer Produktionsanlage bezieht sich die Erfindung überdies auf ein Computerprogrammprodukt, umfassend ein greifbares, computerlesbares Speichermedium mit gespeichertem Computercode, welcher eingerichtet ist, einen oder mehrere Prozessoren einer Bedieneinheit mit einer oder mehreren Applikationen zur Bedienung mindestens einer Produktionsanlage so zu steuern, dass: Konfigurationsdaten in einem Konfigurationsdatenspeicher der Bedieneinheit abgespeichert werden, wobei die Konfigurationsdaten für die Konfiguration der einen oder mehreren Applikationen der Bedieneinheit vorgesehen sind; auf im Konfigurationsdatenspeicher der Bedieneinheit abgespeicherte Konfigurationsdaten zugegriffen wird und diese Konfigurationsdaten über eine Kommunikationsschnittstelle der Bedieneinheit mit Konfigurationsdaten, welche in einem Konfigurationsdatenspeicher einer örtlich entfernt angeordneten Bedieneinheit abgespeichert sind, synchronisiert werden; und von mindestens einer Applikation der Bedieneinheit eine Leseanfrage für abgespeicherte Konfigurationsdaten entgegengenommen wird, auf abgespeicherte Konfigurationsdaten zugegriffen wird, um der Leseanfrage entsprechende abgespeicherte Konfigurationsdaten zu lesen und gelesene Konfigurationsdaten an die mindestens eine Applikation der Bedieneinheit zur Konfiguration der mindestens einen Applikation übergeben werden.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch mehrere Bedieneinheiten für mindestens eine Produktionsanlage;
- Fig. 2: schematisch den Synchronisationsablauf zwischen einer als Slave konfigurierten Bedieneinheit und einer als Master konfigurierten Bedieneinheit; und
- Fig. 3: schematisch den Ablauf bei Löschen von Konfigurationsdaten in den Konfigurationsspeicher von als Slave konfigurierten Bedieneinheiten.

### WEG(E) ZUR AUSFÜHRUNG DER ERFINDUNG

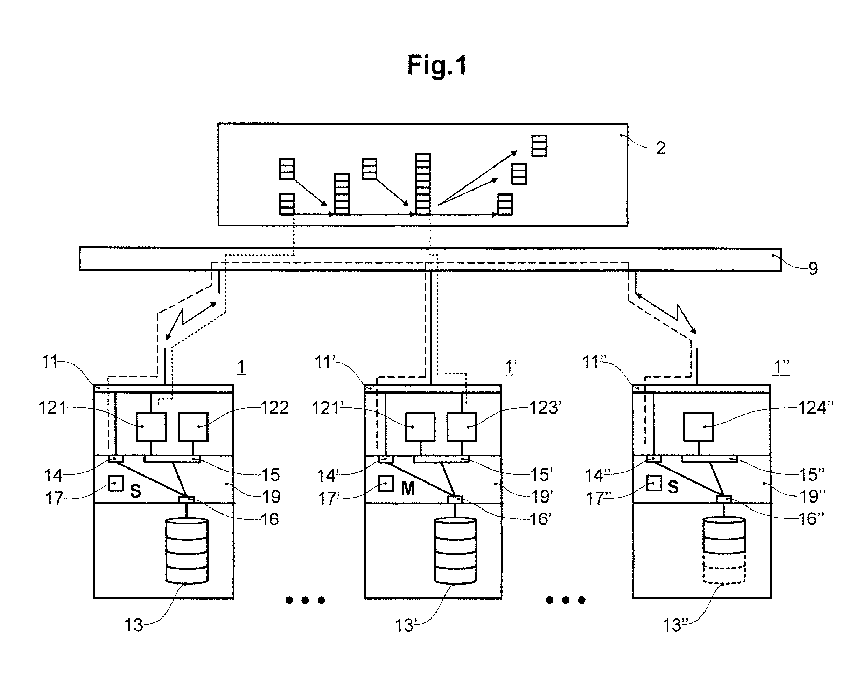

Figur 1 zeigt schematisch mehrere Bedieneinheiten 1, 1', 1" mit jeweils einer oder mehreren Applikationen 121, 122, welche für das Bedienen mindestens einer Produktionsanlage 2 eingerichtet sind. Die mindestens eine Produktionsanlage 2 umfasst z.B. eine Produktverarbeitungsanlage wie z.B. eine Sortier- oder Logistikanlage, eine Druckproduktverarbeitungsanlage oder irgendeine andere Produktionsanlage. Die mindestens eine Produktionsanlage 2 umfasst insbesondere mehrere Maschinen oder Produktionsabschnitte. Die mindestens eine Produktionsanlage 2 ist beispielsweise in einem Raum, einer Halle, einem Gebäude, einem Gebäudekomplex, einem Quartier mit verschiedenen Gebäuden, etc. angeordnet und weist z.B. Abmessungen von einigen Metern bis einigen hundert Meter auf.

Die Bedieneinheiten 1, 1', 1" weisen mehrere Funktionsmodule auf, welche vorzugsweise als programmierte Softwaremodule ausgeführt sind und Computerprogrammcode umfassen zur Steuerung von einem oder mehreren Prozessoren der Bedieneinheiten 1, 1', 1". Der Computerprogrammcode ist auf einem oder mehreren fest oder entfernbar mit den Prozessoren verbindbaren computerlesbaren Speichermedien gespeichert. Der Fachmann wird jedoch verstehen, dass die Funktionsmodule in alternativen Ausführungsvarianten teilweise oder vollständig durch Hardwarekomponenten ausgeführt werden können.

Wie in Figur 1 schematisch dargestellt, ist eine Kommunikationseinrichtung 9 vorgesehen, welche eingerichtet ist, um insbesondere zwischen den einzelnen Bedieneinheiten 1, 1', 1" untereinander sowie zwischen den Bedieneinheiten 1, 1', 1" und der mindestens einen Produktionsanlage 2 eine oder mehrere Kommunikationsverbindungen zur Verfügung zu stellen.

Die zwischen den einzelnen Bedieneinheiten 1, 1', 1" erstellten eine oder mehreren Kommunikationsverbindungen sind eingerichtet, um die nachfolgend beschriebene Kommunikation zwischen den Bedieneinheiten 1, 1', 1" zu ermöglichen.

Die zwischen den Bedieneinheiten 1, 1', 1" und der mindestens einen Produktionsanlage erstellten eine oder mehrere Kommunikationsverbindungen sind insbesondere eingerichtet, um zum Bedienen der mindestens einen Produktionsanlage 2 von den Bedieneinheiten 1, 1', 1" Bedienbefehle an die mindestens eine Produktionsanlage 2 zu übermitteln. In einer Variante werden über die eine oder mehreren Kommunikationsverbindungen Zustandsdaten über die mindestens eine Produktionsanlage 2 an die Bedieneinheiten 1, 1', 1" übermittelt. Bedienbefehle, welche insbesondere auf den Bedieneinheiten 1, 1', 1" erzeugt werden, können das Starten oder Stoppen von Maschinen, das Einstellen von Geschwindigkeiten, das Einschalten von Hilfseinrichtungen wie einer Beleuchtung, etc. umfassen. Zustandsdaten, welche insbesondere durch bei der mindestens einen Produktionsanlage 2 angebrachten Sensoren erfasst werden, können den Füllstand eines Behälters, die Temperatur einer Maschine, den Schaltzustand einer Hilfseinrichtung wie einer Beleuchtung, etc. betreffen.

Nachfolgend wird eine der drei in Figur 1 dargestellten Bedieneinheiten 1, 1', 1" detailliert beschrieben. Die verbleibenden in Figur 1 dargestellten Bedieneinheiten 1 , 1', 1" sind im Wesentlichen gleich aufgebaut, können jedoch auch zusätzliche und/oder andere Merkmale aufweisen, wie später noch beschrieben wird.

Wie in Figur 1 schematisch dargestellt, weist die Bedieneinheit 1 eine oder mehrere Kommunikationsschnittstellen 11 auf welche eingerichtet sind, eine oder mehrere Kommunikationsverbindungen insbesondere zu der Kommunikationseinrichtung 9, zu der mindestens einen Produktionsanlage 2 und/oder zu örtlich entfernt angeordneten Bedieneinheiten 1', 1" zu erstellen. Die einen oder mehreren Kommunikationsschnittstellen umfassen insbesondere kontaktbehaftete und/oder kontaktlose Kommunikationsschnittstellen, wie z.B. eine Ethernet-Kommunikationsschnittstelle, eine WLAN Kommunikationsschnittstelle (WLAN: Wireless Local Area Network), eine Bluetooth Kommunikationsschnittstelle, etc. Die Kommunikationseinrichtung 9 weist dementsprechend insbesondere Ethernet-Switches, WLAN Zugangspunkte, Bluetooth Kommunikationseinrichtungen, etc. auf. Die Kommunikationsverbindungen zwischen der Kommunikationseinrichtung 9 und der mindestens einen Produktionsanlage 2 umfassen insbesondere Ethernet-Kommunikationseinrichtungen.

Wie in Figur 1 schematisch dargestellt, umfasst die Bedieneinheit 1 mehrere Applikationen 121, 122. Eine oder mehrere der Applikationen 121, 122 sind beispielsweise für das Bedienen der mindestens einen Produktionsanlage 2 eingerichtet und verfügen dazu insbesondere über Kommunikationsmodule, um zum Bedienen der mindestens einen Produktionsanlage 2 eine oder mehrere Kommunikationsverbindungen zur mindestens einen Produktionsanlage 2 aufzubauen. Neben Applikationen 121, 122 welche zum Bedienen der mindestens einen Produktionsanlage eingerichtet sind, sind eine oder mehrere Applikationen 121, 122 vorgesehen, welche beispielsweise auf der Bedieneinheit 1 lokal ablaufen und keine externen Kommunikationsverbindungen wie z.B. zur mindestens einen Produktionsanlage 2 aufbauen. Eine oder mehrere lokal ablaufende Applikation 121, 122 sind beispielsweise eingerichtet, die Bedieneinheit 1 zu konfigurieren, an der Bedieneinheit 1 Wartungsaufgaben wie das Erstellen einer Sicherungskopie oder das Zurückspielen einer Sicherungskopie vorzunehmen, etc.

Wie in Figur 1 schematisch dargestellt umfasst die Bedieneinheit 1 einen Konfigurationsdatenspeicher 13. Der Konfigurationsdatenspeicher 13 ist eingerichtet, Konfigurationsdaten abzuspeichern, insbesondere Konfigurationsdaten welche für das Konfigurieren der Applikationen 121, 122 der Bedieneinheit 1 vorgesehen sind. Die Konfigurationsdaten der Applikationen 121, 122, der Bedieneinheit 1 umfassen beispielsweise Kommunikationsadressen zum Aufbau von Kommunikationsverbindungen zur mindestens einen Produktionsanlage 2, Minimal- und Maximalwerte für die Geschwindigkeitseinstellung einer Maschine der mindestens einen Produktionsanlage 2, Listen mit Bedienfunktionen für Maschinen der mindestens einen Produktionsanlage 2, etc. Mit den im Konfigurationsdatenspeicher 2 abgespeicherten Konfigurationsdaten ist insbesondere definiert, welche Möglichkeiten die Applikationen 121, 122 für das Bedienen der mindestens einen Produktionsanlage 2 aufweisen, wobei Änderungen der Konfigurationsdaten auch Änderungen der Möglichkeiten zum Bedienen der mindestens einen Produktionsanlage 2 durch die Applikationen 121, 122 zur Folge haben.

In einer Ausführungsform sind die im Konfigurationsdatenspeicher 13 abgespeicherten Konfigurationsdaten in applikationsübergreifende Konfigurationsdaten und applikationsspezifische Konfigurationsdaten aufgeteilt, wobei die applikationsübergreifenden Konfigurationsdaten für die gemeinsame Konfiguration mehrerer oder aller Applikationen 121, 1 22 vorgesehen sind und die applikationsspezifischen Konfigurationsdaten für die applikationsspezifische Konfiguration einer einzelnen oder einzelner Applikationen 121, 122 vorgesehen sind. So umfassen die applikationsübergreifenden Konfigurationsdaten beispielsweise eine Kommunikationsadresse, unter welcher eine Kommunikationsverbindung zu der mindestens einen Produktionsanlage 2 aufgebaut werden kann, während die applikationsspezifischen Konfigurationsdaten beispielsweise für jede der Applikationen 121, 122 je eine Kennung umfasst die definiert, welche der Maschinen der mindestens einen Produktionsanlage von der betreffenden Applikation 121, 122 zu bedienen ist.

In einer Ausführungsform wirken eine oder mehrere Applikationen 121, 122 mit einer Benutzerschnittstelle der Bedieneinheit 1 zusammen. Die Benutzerschnittstelle ist insbesondere eingerichtet, um einem Benutzer der Bedieneinheit 1 einen oder mehrere zum Bedienen der mindestens einen Produktionsanlage 2 verfügbare Bedienbefehle anzuzeigen und beispielsweise vom Benutzer selektierte Bedienbefehle an die betreffenden Applikationen 121, 122 weiterzuleiten, welche eingerichtet sind, aufgrund des selektierten Bedienbefehls das Bedienen der mindestens einen Produktionsanlage 2 entsprechend vorzunehmen, also z.B. eine Maschine zu starten oder zu stoppen, die Geschwindigkeit eines Förderbands einzustellen, etc.

Die Benutzerschnittstelle der Bedieneinheit 1 umfasst insbesondere Eingabe-/Ausgabeeinrichtungen, wie beispielsweise einen Touchscreen, eine Tastatur, einen Display, eine Kamera, ein Mikrofon, einen Lautsprecher, etc. Je nach Anwendung oder Benutzervorgabe ist die Benutzerschnittstelle als grafische Benutzerschnittstelle, als sprachbasierte Benutzerschnittstelle, als gestenbasierte Benutzerschnittstelle etc. eingerichtet. Bei einer grafischen Benutzerschnittstelle wird beispielsweise ein Bedienbefehl zum Bedienen der mindestens einen Produktionsanlage 2 auf einem Touchscreen oder Display der Bedieneinheit angezeigt und durch den Benutzer mit der Berührung eines Touchscreens an der entsprechenden Stelle oder mit dem Betätigen von einer oder mehreren Tasten einer Tastatur ausgelöst. Bei einer akustischen Benutzerschnittstelle erfolgt beispielsweise die Auslösung eines Bedienbefehls zum Bedienen der mindestens einen Produktionsanlage 2 durch das Aussprechen von Sätzen oder gesprochenen Kommandos. Bei einer gestenbasierten Benutzerschnittstelle erfolgt beispielsweise die Auslösung eines Bedienbefehls zum Bedienen der mindestens einen Produktionsanlage 2 durch Gesten wie insbesondere Fingergesten, Handgesten, Armgesten, etc.

Wie in Figur 1 schematisch dargestellt, umfass die Bedieneinheit 1 einen Konfigurationsdatenspeicher 13 welcher eingerichtet ist, Konfigurationsdaten abzuspeichern, welche für die Konfiguration von einer oder mehreren Applikationen 121, 122 der Bedieneinheit vorgesehen sind. Beispielsweise wird durch die Konfigurationsdaten definiert, welche Funktionalitäten den Applikationen 121, 122 zur Laufzeit zur Verfügung stehen, also z.B. welche Funktionen einer Maschine der Mindestens einen Produktionsanlage 2 durch die betreffenden Applikationen 121, 122 bedient werden können, d.h. ob die Maschine z.B. nur gestartet und gestoppt werden kann oder ob auch die Geschwindigkeit der Maschine eingestellt werden kann.

Wie in Figur 1 schematisch dargestellt, umfasst die Bedieneinheit 1 ein Synchronisationsmodul 14 welches eingerichtet ist, auf in einem Konfigurationsdatenspeicher 13 der Bedieneinheit 1 abgespeicherten Konfigurationsdaten zuzugreifen und diese über eine Kommunikationsschnittstelle 11 der Bedieneinheit 1 mit Konfigurationsdaten zu synchronisieren, welche in einem Konfigurationsdatenspeicher 13', 13" einer örtlich entfernt angeordneten Bedieneinheit 1', 1" abgespeichert sind. Die Synchronisation der Konfigurationsdaten erfolgt insbesondere über eine über die Kommunikationsschnittstelle 11 erstellte Kommunikationsverbindung zwischen der Bedieneinheit 1 und einer örtlich entfernt angeordneten Bedieneinheit 1', 1". Bei der Synchronisation werden die im Konfigurationsdatenspeicher 13 der Bedieneinheit 1 mit Konfigurationsdaten in Übereinstimmung gebracht, welche in einem Konfigurationsdatenspeicher 13', 13" einer örtlich entfernt angeordneten Bedieneinheit 1', 1" abgespeichert sind.

Bei der Synchronisation der Konfigurationsdaten wird beispielsweise in einem ersten Schritt über die Kommunikationsschnittstelle 11 eine Kommunikationsverbindung von der Bedieneinheit 1 zu einer örtlich entfernt angeordneten Bedieneinheit 1', 1" erstellt. Beispielsweise in einem zweiten Schritt werden die im Konfigurationsdatenspeicher 13 abgespeicherten Konfigurationsdaten mit den örtlich entfernt angeordneten Konfigurationsdaten verglichen, welche im Konfigurationsdatenspeicher 13', 13" der örtlich entfernt angeordneten Bedieneinheit 1', 1" abgespeichert sind. Falls zwischen den Konfigurationsdaten und den örtlich entfernt angeordneten Konfigurationsdaten eine Differenz festgestellt wird, wird beispielsweise in einem dritten Schritt eine Synchronisationsrichtung festgelegt, insbesondere wird aufgrund eines Zeitstempels ermittelt, welche Daten neueren Datums sind. Die älteren Daten werden anschliessend beispielsweise in einem vierten Schritt durch die neueren Daten im betreffenden Konfigurationsdatenspeicher 13, 13', 13" überschrieben. In einer Ausführungsvariante wird irgendein anderes Kriterium herangezogen um zu bestimmen, welche Daten beizubehalten sind und welche Daten zu überschreiben sind. Nach der Synchronisation stimmen die Daten welche im Konfigurationsdatenspeicher 13 der Bedieneinheit 1 abgespeichert sind mit den Daten überein, welche in einem örtlich entfernt angeordneten Konfigurationsspeicher 13', 13" einer örtlich entfernt angeordneten Bedieneinheit 1', 1" abgespeichert sind.

Wie in Figur 1 schematisch dargestellt, umfasst die Bedieneinheit 1 ein Konfigurationszugriffsmodul 15 welches eingerichtet ist, von den Applikationen 121, 122 Leseanfragen für im Konfigurationsdatenspeicher 13 abgespeicherte Konfigurationsdaten entgegenzunehmen. Das Konfigurationszugriffsmodul 15 ist eingerichtet, die entgegengenommenen Leseanfragen auszuführen, d.h. auf abgespeicherte Konfigurationsdaten zuzugreifen und die angeforderten Konfigurationsdaten aus dem Konfigurationsdatenspeicher 13 auszulesen, und anschliessend die ausgelesenen Konfigurationsdaten an die Applikationen 121, 122 zu übergeben. Eine Leseanfrage umfasst beispielsweise einen Identifikator, mit welchem im Konfigurationsdatenspeicher 13 abgespeicherte Konfigurationsdaten identifiziert werden, beispielsweise in Form eines Strings wie z.B. "Kommunikationsadresse der Produktionsanlage". Die ausgelesenen Konfigurationsdaten werden beispielsweise in der Form eines Strings wie z.B. "192.168.0.50" an die Applikation 121, 122 übergeben.

In einer Ausführungsform ist das Konfigurationszugriffsmodul 15 eingerichtet, Änderungsanfragen für das Ändern von Konfigurationsdaten im Konfigurationsdatenspeicher 13 entgegenzunehmen und auf im Konfigurationsdatenspeicher 13 zuzugreifen und abgespeicherte Konfigurationsdaten entsprechend der Änderungsanfrage zu ändern. Die Änderungsanfrage umfasst beispielsweise eine Schreibanfrage, eine Löschanfrage, eine Modifikationsanfrage, etc. Eine Schreibanfrage oder eine Modifikationsanfrage umfasst insbesondere einen Identifikator, z.B. in der Form eines Strings wie beispielsweise "Maximalgeschwindigkeit des Förderers", sowie einen Konfigurationswert, z.B. in der Form eines Strings wie beispielsweise "5 m/s". Bei der Schreibanfrage wird beispielsweise der Identifikator zusammen mit dem Konfigurationswert in die abgespeicherten Konfigurationsdaten geschrieben. Bei der Modifikationsanfrage werden die abgespeicherten Konfigurationsdaten nach dem Identifikator durchsucht und der abgespeicherte Konfigurationswerte modifiziert. Das Konfigurationszugriffsmodul 15 ist in einer Variante eingerichtet, nach dem Ändern von Konfigurationsdaten im Konfigurationsdatenspeicher 13 eine Quittierung über das Ändern der Konfigurationsdaten an die betreffende Applikation 121, 122 zu übergeben.

In einer Ausführungsvariante ist das Konfigurationszugriffsmodul 15 eingerichtet, nach dem Empfang einer Änderungsanfrage und dem Ändern der Konfigurationsdaten dem Synchronisationsmodul 14 eine entsprechende Signalisierung zu übergeben. Das Synchronisationsmodul 14 ist beispielsweise eingerichtet, aufgrund der Signalisierung eine Synchronisation von Konfigurationsdaten durchzuführen. Die Signalisierung enthält beispielsweise Informationen über die geänderten Konfigurationsdaten, so dass das Synchronisationsmodul nicht zunächst ermitteln muss, welche Konfigurationsdaten zu synchronisieren sind.

In einer Ausführungsvarianten ist das Synchronisationsmodul 14 eingerichtet, aufgrund eines oder mehrere der folgenden Ereignisse eine Synchronisation auszulösen: Ablauf eines Zeitintervalls, Verfügbarkeit einer Kommunikationsverbindung insbesondere nach einem Unterbruch, Reset oder erstmaliges Aufstarten der Bedieneinheit 1, Empfang einer Signalisierung vom Konfigurationszugriffsmodul 15, von einer örtlich entfernt angeordneten Bedieneinheit 1', 1" und/oder von irgendeinem anderen Sender. In einer Ausführungsvariante ist das Synchronisationsmodul 14 eingerichtet, zur Initialisierung des Konfigurationsdatenspeichers 13 der Bedieneinheit 1 Konfigurationsdaten von einem Konfigurationsdatenspeicher 13', 13" einer örtlich entfernt angeordneten Bedieneinheit 1', 1" zu kopieren.

Der Konfigurationsdatenspeicher 13 ist beispielsweise in einem nichtflüchtigen Speicher der Bedieneinheit 1 enthalten, beispielsweise in einer Speicherkarte, in einem SSD Laufwerk (SSD: Solid State Drive), etc. Der Konfigurationsdatenspeicher 13 ist eingerichtet, die Informationen für die Konfiguration der Applikationen 121, 122 in der Form von Konfigurationsdaten abzuspeichern. In einer Ausführungsvariante umfasst der Konfigurationsdatenspeicher 13 ein Dateisystem, in welchem Konfigurationsdaten abgespeichert sind, insbesondere in Verzeichnissen und Unterverzeichnissen sowie darin abgespeicherten Dateien, welche Konfigurationsdaten enthalten. In einer weiteren Ausführungsvariante umfasst der Konfigurationsdatenspeicher 13 ein Datenbanksystem, beispielsweise ein SQL Datenbanksystem (SQL: Structured Query Language), in welchem Konfigurationsdaten abgespeichert sind.

In einer Ausführungsvariante sind das Synchronisationsmodul 14 und das Applikationszugriffsmodul 15 in einer Speichersteuerung 19 zusammengefasst. Die Speichersteuerung 19 ist beispielsweise als Softwaremodul ausgeführt, welches sich insbesondere zwischen den Applikationen 121, 122 und dem Konfigurationsdatenspeicher 13 anordnet, wobei die Applikationen 121, 122 und der Konfigurationsdatenspeicher 13 mit der Speichersteuerung 19 zusammenwirken. Der Zugriff der Applikationen 121, 122 auf den Konfigurationsdatenspeicher 13 zum Lesen von Konfigurationsdaten und zum Schreiben von Konfigurationsdaten erfolgt über die Speichersteuerung 19, welche sich gegenüber den Applikationen 121, 122 beispielsweise wie ein Konfigurationsdatenspeicher 13 verhält. In einer Ausführungsvariante ist das Synchronisationsmodul 14 gegenüber den Applikationen 121, 122 durch die Speichersteuerung 19 verdeckt, so dass den Applikationen ein transparenter Zugriff auf Konfigurationsdaten zur Verfügung steht, wobei die Konfigurationsdaten zwischen den Bedieneinheiten 1, 1', 1" synchronisiert sind. Mit einer solchen Speichersteuerung lassen sich Bedieneinheiten 1, 1', 1" insbesondere mit der Funktionalität von zwischen den Bedieneinheiten 1, 1', 1" synchronisieren Konfigurationsdaten ergänzen, und zwar insbesondere ohne dass die auf den Bedieneinheiten 1, 1', 1" installierten Applikationen 121, 122 modifiziert werden müssen.

In einer Ausführungsvariante umfasst die Bedieneinheit 1 wie in Figur 1 schematisch dargestellt ein Überprüfungsmodul 16 welches eingerichtet ist, beim Zugriff auf abgespeicherte Konfigurationsdaten mit dem Konfigurationszugriffsmodul 15 und dem Synchronisationsmodul 14 zusammenzuwirken, wobei durch das Überprüfungsmodul 16 insbesondere eines oder mehrere der folgenden Ereignisse detektiert und abgefangen werden: zeitgleicher Zugriff auf abgespeicherte Konfigurationsdaten durch das Konfigurationszugriffsmodul 15 und durch das Synchronisationsmodul 14, fehlerhaftes Lesen und/oder Ändern von abgespeicherten Konfigurationsdaten insbesondere aufgrund einer fehlerhaften Leseanfrage und/oder Änderungsanfrage.

Falls beispielsweise ein Zugriff durch das Synchronisationsmodul 14 auf den Konfigurationsspeicher 13 noch nicht abgeschlossen ist und zugleich ein Zugriff durch das Konfigurationszugriffsmodul 15 erfolgt, dann wird der Zugriff durch das Konfigurationszugriffsmodul 15 vom Überprüfungsmodul 16 beispielsweise entgegengenommen aber zurückgestellt, bis der Zugriff durch das Synchronisationszugriffsmodul 14 abgeschlossen ist und alle erforderlichen Daten übergeben sind. Erst anschliessend wird durch das Überprüfungsmodul 16 der Zugriff durchgeführt und die erforderlichen Konfigurationsdaten geändert.

Das Überprüfungsmodul 16 ist beispielsweise eingerichtet, um beim Ändern von Konfigurationsdaten die Änderungsanfrage zusammen mit den zu ändernden Konfigurationsdaten zunächst vollständig entgegenzunehmen und erst anschliessend im Konfigurationsspeicher 13 die Änderung vorzunehmen. Falls beispielsweise beim Empfang der Änderungsanfrage die betreffende Applikation abstürzt und nur eine unvollständige Änderungsanfrage liefert, dann wird durch das Überprüfungsmodul 16 die unvollständige Änderungsanfrage einfach verworfen. Dadurch ist sichergestellt, dass die Konfigurationsdaten im Konfigurationsdatenspeicher 13 konsistent gehalten sind, auch im Falle einer Fehlfunktion oder einem frühzeitigem Abbruch einer Applikation.

In einer Ausführungsvariante umfasst die Bedieneinheit 1 wie in Figur 1 schematisch dargestellt ein Master-Slavemodul 17 welches eingerichtet ist, die Bedieneinheit 1 als Master oder als Slave zu definieren. Das Synchronisationsmodul 14 ist beispielsweise eingerichtet, im Falle einer als Master definierten Bedieneinheit 1 die Synchronisation von Konfigurationsdaten ausschliesslich zu einer als Slave definierten örtlich entfernt angeordneten Bedieneinheit 1', 1" durchzuführen und im Falle einer als Slave definierten Bedieneinheit 1 die Synchronisation von Konfigurationsdaten ausschliesslich zu einer als Master definierten örtlich entfernt angeordneten Bedieneinheit 1', 1" durchzuführen.

Das Master-Slavemodul 17 umfasst beispielsweise eine Speicherzelle, in welcher der String "S" abgespeichert ist, falls die Bedieneinheit 1 als Slave definiert ist und in welcher der String "M" abgespeichert ist, falls die Bedieneinheit 1 als Master definiert ist. In einer Variante ist im Falle einer als Slave definierten Bedieneinheit 1 zudem eine Kommunikationsadresse abgespeichert, welche einer örtlich entfernt angeordneten Bedieneinheit 1', 1" zugeordnet ist die als Master definiert ist. Bei mehreren Bedieneinheiten 1, 1', 1" ist beispielsweise nur eine einzige Bedieneinheit 1, 1', 1" als Master definiert und alle anderen Bedieneinheiten 1, 1', 1" sind als Slave definiert. In Figur 1 ist dies schematisch dargestellt, wobei die Bedieneinheit mit dem Bezugszeichen 1' als Master und die Bedieneinheiten mit den Bezugszeichen 1, 1" als Slave definiert sind. Um sicherzustellen, dass nur eine einzige Bedieneinheit 1, 1', 1" als Master und die restlichen Bedieneinheiten 1, 1', 1" als Slave definiert sind, kann eine statische Konfiguration der Bedieneinheiten 1, 1', 1" vorgenommen werden, d.h. im Master-Slavemodul 17 wird statisch festgelegt, ob es sich bei einer betreffenden Bedieneinheit 1, 1', 1" um den Master oder um einen Slave handelt. Die Zuordnung als Master oder Slave kann auch dynamisch erfolgen, indem die Bedieneinheiten 1, 1', 1" beispielsweise über eine Broadcast Adresse kommunizieren und dynamisch festlegen, welche der Bedieneinheiten 1, 1', 1" als Master zu definieren ist. Dazu kann beispielsweise den Bedieneinheiten 1, 1', 1" dynamisch ein Index betreffend die Erreichbarkeit zugeordnet werden, beispielsweise indem für alle möglichen Kommunikationspartner ein Delay bestimmt wird und diejenige Bedieneinheit 1, 1', 1" als Master festgelegt wird, bei welcher die Summe der Delays am kleinsten ist. Die statische Zuordnung als Master und Slave hat den Vorteil, dass keine dynamischen Probleme betreffend das Ermitteln des Slaves zu bewältigen sind. Falls die als Master definierte Bedieneinheit 1, 1', 1" jedoch ausfällt, beispielsweise aufgrund eines Systemabsturzes oder fehlender Kommunikationsverbindungen, muss eine der verbleibenden Slaves als Master definiert werden.

In einer Variante ist eine als Slave definierte Bedieneinheit 1 eingerichtet, bei Änderungen von im Konfigurationsdatenspeicher 13 abgespeicherten Konfigurationsdaten diese Änderungen nur mit der als Master definierten örtlich entfernt angeordneten Bedieneinheit 1', 1" zu synchronisieren. Es erfolgt keine Synchronisation zu einer als Slave definierten örtlich entfernt angeordneten Bedieneinheit 1', 1 ".

In einer Variante ist eine als Master definierte Bedieneinheit 1 eingerichtet, bei Änderungen von im Konfigurationsdatenspeicher 13 abgespeicherten Konfigurationsdaten diese Änderungen mit allen als Slave definierten örtlich entfernt angeordneten Bedieneinheiten 1, 1" zu synchronisieren. Die als Master definierte Bedieneinheit 1 umfasst beispielsweise eine Tabelle mit Kommunikationsadressen der als Slave definierten örtlich entfernt angeordneten Bedieneinheiten 1, 1". Diese Tabelle ist beispielweise statisch konfiguriert oder wird dynamisch aufgrund von auf einer Broadcast Adresse abgesetzten Anfragen betreffend die Kommunikationsadresse an die als Slave definierten Bedieneinheiten nachgeführt.

In einer Ausführungsvariante ist das Konfigurationszugriffsmodul 15 eingerichtet, beim Zugriff auf Konfigurationsdaten zu überprüfen, ob der Zugriff auf den Konfigurationsdatenspeicher 13 der Bedieneinheit 1 oder auf den Konfigurationsdatenspeicher 13', 13" einer örtlich entfernt angeordneten Bedieneinheit 1', 1" zu erfolgen hat und den Zugriff auf Konfigurationsdaten entsprechend auf den Konfigurationsdatenspeicher 13 der Bedieneinheit 1 oder auf den Konfigurationsdatenspeicher 13', 13" einer örtlich entfernt angeordneten Bedieneinheit 1', 1" durchzuführen. So verfügt beispielsweise eine Bedieneinheit 1 welche als Embedded Computer ausgeführt ist, also eine Bedieneinheit 1 , welche nur beschränkte oder minimale Komponenten aufweist, nur über beschränkte eine Speicherkapazität oder über einen Speicher wie z.B. ein SSD Laufwerk (SSD: Solid State Disk), bei welchem die Anzahl Schreibzyklen begrenzt ist. Das Konfigurationszugriffsmodul 15 ist dementsprechend eingerichtet, diesem Umstand Rechnung zu tragen und den Zugriff auf den Konfigurationsdatenspeicher 13 der Bedieneinheit 1 zu minimieren. Stattdessen wird auf Konfigurationsdaten von örtlich entfernt angeordneten Bedieneinheiten 1', 1" zugegriffen. In einer Ausführungsvariante ist das Konfigurationszugriffsmodul 15 eingerichtet, zwischen wesentlichen und unwesentlichen Daten zu unterscheiden, wobei für die wesentlichen Konfigurationsdaten auf den Konfigurationsdatenspeicher 13 der Bedieneinheit 1 und für die unwesentlichen Konfigurationsdaten auf den Konfigurationsdatenspeicher 13', 13" einer örtlich entfernt angeordneten Bedieneinheit 1', 1" zugegriffen wird. Wesentliche Konfigurationsdaten können beispielsweise Bedienbefehle betreffen, welche einer Applikation 121, 122 zur Verfügung stehen. Unwesentliche Konfigurationsdaten können beispielsweise Benutzereinstellungen betreffen welche definieren, nach welchem Farbschema oder Layout eine Benutzerschnittstelle der Bedieneinheit 1 beim Zusammenwirken einer Applikation 121, 122 mit der Benutzerschnittstelle konfiguriert wird. Auch bei einem Ausfall von Kommunikationsverbindungen stehen die wesentlichen Konfigurationsdaten auf der Bedieneinheit 1 zur Verfügung, womit die wesentlichen Funktionalitäten der Applikationen 121, 122 zum Bedienen der Mindestens einen Produktionsanlage 2 sichergestellt ist.

In einer Ausführungsvariante ist das das Konfigurationsdatenzugriffsmodul 15 eingerichtet, beim Ändern von abgespeicherten Konfigurationsdaten, welche das Löschen und/oder Modifizieren von abgespeicherten Konfigurationsdaten betrifft, eine Löschtabelle und/oder Modifikationstabelle nachzuführen, wobei das Synchronisationsmodul 14 eingerichtet ist, eine Synchronisation von abgespeicherten Konfigurationsdaten unter Berücksichtigung der Löschtabelle und/oder der Modifikationstabelle durchzuführen. Insbesondere nach einem Unterbruch von über die Kommunikationsschnittstelle 11 erstellten Kommunikationsverbindungen zu örtlich entfernt angeordneten Bedieneinheiten 1', 1" kann das Löschen und/oder Modifizieren von Konfigurationsdaten nicht unmittelbar erfolgen. Falls die Bedieneinheit 1 während einer gewissen Zeit nicht in der Lage ist, die Synchronisation von Änderungen der im Konfigurationsdatenspeicher 13 3 abgespeicherten Konfigurationsdaten mit örtlich entfernt angeordneten Bedieneinheiten 1, 1' zu synchronisieren, dann werden in dieser Zeit alle Änderungen wie das Löschen und/oder das Modifizieren von im Konfigurationsdatenspeicher 13 abgespeicherten Konfigurationsdaten aufgezeichnet. Sobald wieder Kommunikationsverbindungen zu örtlich entfernt angeordneten Bedieneinheiten 1', 1" aufgebaut werden können, werden zunächst die gelöschten und/oder modifizierten Konfigurationsdaten auch auf den örtlich entfernt angeordneten Bedieneinheiten 1, 1' gelöscht und/oder modifiziert.

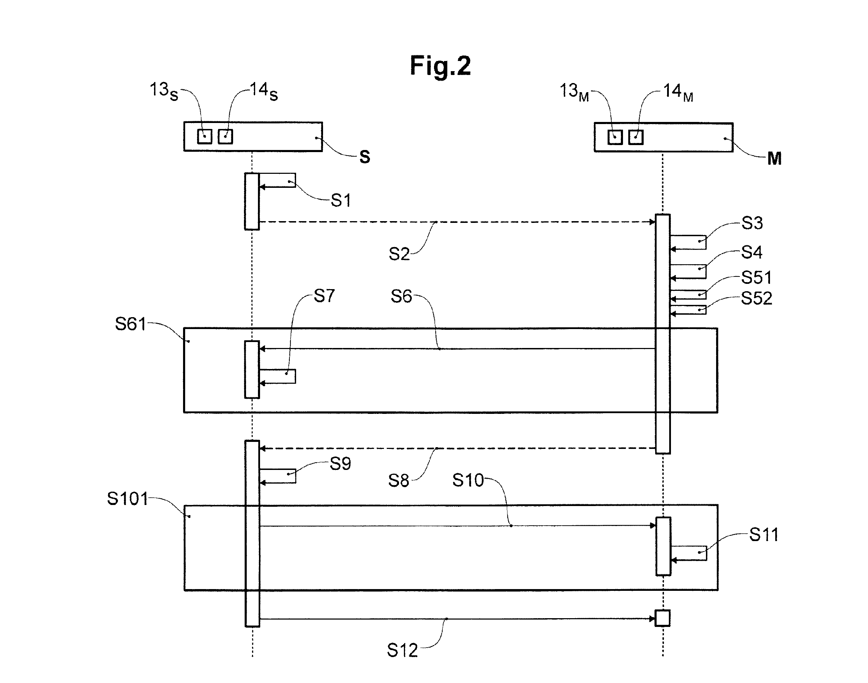

Figur 2 zeigt schematisch den Synchronisationsablauf zwischen einer als Slave konfigurierten Bedieneinheit S und einer als Master konfigurierten Bedieneinheit M, welche die beschriebenen Einrichtungen aufweisen, also insbesondere je einen Konfigurationsdatenspeicher 13_{S}, 13_{M} und je ein Synchronisationsmodul 14_{S}, 14_{M}. Die Synchronisationsmodule 14_{S}, 14_{M} des Slaves und des Masters sind eingerichtet, die Synchronisation der in den jeweiligen Konfigurationsdatenspeichern 13_{S}, 13_{M} abgespeicherten Konfigurationsdaten gemäss den folgenden Schritten durchzuführen. Im folgenden wird die als Slave konfigurierte Bedieneinheit S auch als Slave S bezeichnet und die als Master konfigurierte Bedieneinheit M wird auch als Master M bezeichnet.

In Schritt S1 werden alle Dateien ermittelt, welche in einem Verzeichnis und ggf. in einem darunterliegenden Verzeichnisbaum des Konfigurationsdatenspeichers 13_{S} des Slaves S ermittelt. Es wird eine Dateiliste erstellt mit den auf dem Slave S abgespeicherten Dateien, welche für jede Datei den relativen Pfad zusammen mit dem Dateinamen und das letzte Änderungsdatum der Datei enthält.

In Schritt S2 wird die ermittelte Dateiliste des Slaves S an den Master M übermittelt.

In Schritt S3 werden schon gelöschte Dateien behandelt, d.h. falls beispielsweise eine Datei auf dem Slave S gelöscht wurde und auf dem Master M noch vorhanden ist, wird diese Datei auf dem Master M gelöscht.

In Schritt S4 werden alle Dateien auf dem Master ermittelt und insbesondere eine Dateiliste erstellt mit den auf dem Master M abgespeicherten Dateien.

In Schritt S51 und Schritt S52 werden ermittelte Dateilisten verglichen und weitere Dateilisten werden erzeugt.

In Schritt S51 wird eine Dateiliste erzeugt mit vom Slave S auf den Master M zu kopierende Dateien, welche alle Dateien enthält, die auf dem Slave S vorhanden sind aber nicht auf dem Master M und welche alle Dateien enthält, die auf dem Slave S neuer sind als auf dem Master M.

In Schritt S52 wird eine Dateiliste erzeugt mit Dateinamen sowie deren Dateiinhalten von Dateien, welche auf dem Master M aber nicht auf dem Slave S vorhanden sind, sowie von Dateien, welche auf dem Master M neuer sind als auf dem Slave S. Diese Dateiliste, welche Dateinamen und deren Dateiinhalte enthält, ist vom Master M an den Slave S zu übertragen. Für die Übertragung, welche im Schritt S6 erfolgt, werden die Dateien in Pakete unterteilt, welche eine vorgegebene Grösse nicht überschreiten. Die Pakete werden dann einzeln vom Master M an den Slave S übertragen, wobei im Schritt S7 jedes Packet auf dem Slave abgespeichert wird. Im Schritt S61 wird in einem Loop das Übertragen für alle Pakete ausgeführt.

Im Schritt S8, nachdem alle Pakete gemäss Schritt S6 und Schritt S61 übertragen sind, wird die Dateiliste mit vom Slave S auf den Master M zu kopierenden Dateien vom Master M an den Slave S übertragen. Aufgrund dieser Dateiliste werden im Schritt S9 mit den entsprechenden Dateien Pakete erstellt, welche eine maximale Grösse aufweisen. In Schritt S10 werden die Pakete vom Slave S an den Master M übertragen, wobei in Schritt S11 die übertragenen Pakete auf dem Master abgespeichert werden. In Schritt S101 werden in einem Loop die Pakete solange übermittelt, bis alle Daten übertragen sind. Dem Master M wird dies in Schritt S12 am Ende mitgeteilt, beispielsweise indem eine entsprechende Meldung an den Master M übermittelt wird.

Nach der Durchführung der Schritte S1 bis S12 sind die im Konfigurationsdatenspeicher 13' des Slaves S abgespeicherten Konfigurationsdaten mit den im Konfigurationsdatenspeicher 13 des Masters M abgespeicherten Konfigurationsdaten synchronisiert.

Während der Synchronisation der Konfigurationsdaten wird sichergestellt, dass keine anderen Slaves den Master M kontaktieren und diese für die Synchronisation gesperrt sind. Auf dem Slave S wird ebenfalls sichergestellt, dass die im Konfigurationsdatenspeicher 13 abgespeicherten Konfigurationsdaten während der Synchronisation gesperrt sind. Dadurch wird vermieden, dass es zu einem inkonsistenten Zustand der Konfigurationsdaten kommen kann.

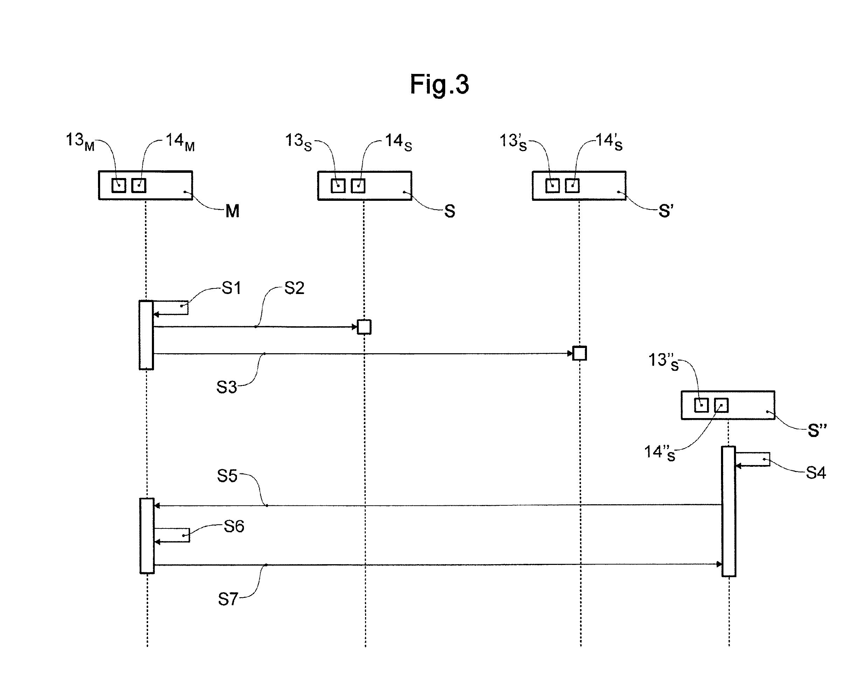

Figur 3 zeigt schematisch den Ablauf bei Löschen von Konfigurationsdaten in den Konfigurationsspeicher 13_{S}, 13_{S}', 13_{S}" von Bedieneinheiten S, S', S" welche als Slave konfiguriert sind, also insbesondere das Löschen einer Datei in den Slaves S, S', S".

In Schritt S1 wird auf dem Master M für alle verbundenen Slaves S, S' eine Nachricht erstellt, die betreffende Datei zu löschen. Wie in Figur 3 schematisch dargestellt, wird die Nachricht in Schritt S2 und in Schritt S3 an die verbundenen Slaves S, S' übermittelt. Der Master M umfasst eine Liste mit bekannten Slaves. In Schritt S1 wird für alle Slaves, welche in der Liste mit bekannten Slaves aufgeführt sind aber nicht verbunden sind, die zu löschende Datei mit dem aktuellen Datum in einer Löschliste gespeichert. Das aktuelle Datum umfasst insbesondere auch die aktuelle Zeit. In Schritt S1 werden ferner alle Slaves aus der Löschliste entfernt, welche nicht (mehr) in der Liste mit bekannten Slaves aufgeführt sind.

In Schritt S4 verbindet sich der Slave mit dem Bezugszeichen S" neu mit dem Master M und signalisiert dies in Schritt S5 dem Master M. Auf dem Master wird überprüft, ob in der Löschliste ein Eintrag für diesen Slave S" vorhanden ist. Falls ein Eintrag vorhanden ist, wird überprüft, ob das Änderungsdatum der zu löschenden Datei auf dem Slave S" neuer ist als das Datum, an welchem die Datei gelöscht wurde. In diesem Fall wurde die Datei seit dem Löschen auf dem Slave S" wieder erstellt und wird deshalb auf dem Slave S" nicht gelöscht, sondern durch Synchronisation wird sie wieder an alle anderen Bedieneinheiten S, S' verteilt. Im Fall wenn das Änderungsdatum nicht neuer ist als das Löschdatum der Datei, wird dem Slave S" im Schritt S7 bei der Synchronisation der Dateiname zum Löschen mitgegeben und der Slave S" löscht die Datei auf dem Slave S". In beiden Fällen wird auf dem Master M der Eintrag für die betreffende Datei aus der Löschliste entfernt.

In einer besonderen Ausführungsform umfassen eine oder mehrere Applikationen 121, 122 Parametrisierungsdaten, mit welchen beispielsweise definiert wird, welche Konfigurationsdaten für die betreffende Applikation 121, 122 zu Anwendung kommen. Die Parametrisierungsdaten sind vorzugsweise ebenfalls synchronisierbar, beispielsweise indem ein Abbild oder eine Teilrepräsentation von aktuellen Parametrisierungsdaten im Konfigurationsdatenspeicher 13 abgespeichert sind und indem Applikationen 121, 122 beispielsweise in regelmässigen Intervallen überprüfen, ob sich Parametrisierungsdaten geändert haben und diese gegebenenfalls nachgeladen werden. Die Parametrisierungsdaten 121, 122 können beispielsweise in einem dynamischen Speicherbereich der Bedieneinheiten 1, 1', 1" vorgesehen sein, so z.B. in einem RAM (Random Access Memory) der Bedieneinheiten 1, 1', 1".

In einer weiteren Ausführungsform ist es vorgesehen, eine Signalisierung über Änderungen im Konfigurationsdatenspeicher 13 in der Form eines Broadcast an die an der Kommunikationseinrichtung 9 angeschlossenen Bedieneinheiten 1, 1', 1" zu übermitteln oder an einen Clearingserver der Kommunikationseinrichtung 9 zu senden, beispielsweise durch das Konfigurationszugriffsmodul 15. Die Bedieneinheiten 1, 1', 1" sind eingerichtet, einen solchen Broadcast zu empfangen oder vom Clearingserver die Informationen zu erhalten. Dadurch werden die Bedieneinheiten 1, 1', 1" über die Änderungen von Daten in einem Konfigurationsdatenspeicher 13 informiert. Die Bedieneinheiten 1, 1', 1" sind insbesondere eingerichtet, nach Feststellung, dass sich Daten in einem Konfigurationsdatenspeicher 13 geändert haben selbständig darüber zu entscheiden, ob eine Synchronisation erforderlich oder sinnvoll ist. Dadurch ist ermöglicht, dass die Synchronisation der Konfigurationsdaten nicht zwingend durchzuführen ist, z.B. falls die verfügbare Restleistung einer Batterie einer Bedieneinheit 1, 1', 1" die Synchronisation als riskant oder nicht zweckmässig erscheinen lässt.

In einer Ausführungsform sind das Synchronisationsmodul 14 und der Konfigurationsdatenspeicher 13 in einer Einheit zusammengefasst. Beispielsweise ist das Synchronisationsmodul 14 ein Bestandteil des Konfigurationsdatenspeichers. In einer weiteren Variante umfasst diese Einheit das Konfigurationszugriffsmodul 15. Durch ein solches Zusammenfassen von Modulen in eine Einheit können bestehende Bedieneinheiten 1, 1', 1" rasch und einfach mit den wesentlichen erfindungsgemässen Merkmalen versehen werden.

In einer Variante ist das Master-Slavemodul 17 als Datenflag ausgeführt, welches insbesondere im Konfigurationsdatenspeicher 13 abgespeichert ist. Beispielsweise das Synchronisationsmodul 14 ist eingerichtet, irgendwelche Speicherbereiche des Konfigurationsdatenspeichers 13 von der Synchronisation auszunehmen, insbesondere ein als Datenflag ausgeführtes Master-Slavemodul 17. So können auch Daten von der Synchronisation ausgeschlossen werden, welche z.B. Ortsinformationen, Batteriestatusinformationen, etc. enthalten, für welche eine Synchronisation keinen Sinn macht.

In einer Variante ist eine Transaktionsabschlussprüfung vorgesehen, welche überprüft, ob das Abspeichern von Konfigurationsdaten im Konfigurationsdatenspeicher 13 vollständig ist. Falls beispielsweise eine erste Synchronisation am Ablaufen ist und zugleich eine zweite Synchronisation gestartet wird, dann kann durch die Transaktionsabschlussprüfung sichergestellt werden, dass keine Kollisionen entstehen.

In einer Variante ist es vorgesehen, während einer Synchronisation die Funktionen der Bedieneinheit zu sperren, so dass nicht aufgrund von unvollständigen oder nicht mehr aktuellen Konfigurationsdaten mit der einen oder den mehreren Applikationen 121, 122 eine Bedienung der Produktionsanlage erfolgt. Dadurch kann insbesondere die Sicherheit bei der Bedienung der Produktionsanlage verbessert werden.

## Patentansprüche

1. Eine Bedieneinheit (1) mit einer oder mehreren Applikationen (121, 122) zur Bedienung mindestens einer Produktionsanlage (2), umfassend:
einen Konfigurationsdatenspeicher (13) welcher eingerichtet ist, Konfigurationsdaten abzuspeichern, welche für die Konfiguration der einen oder mehreren Applikationen (121, 122) der Bedieneinheit (1) vorgesehen sind;
ein Synchronisationsmodul (14) welches eingerichtet ist, auf im Konfigurationsdatenspeicher (13) abgespeicherte Konfigurationsdaten zuzugreifen und diese über eine Kommunikationsschnittstelle (11) der Bedieneinheit (1) mit Konfigurationsdaten zu synchronisieren, welche in einem Konfigurationsdatenspeicher (13', 13") einer örtlich entfernt angeordneten Bedieneinheit (1', 1 ") abgespeichert sind; und
ein Konfigurationszugriffsmodul (15) welches eingerichtet ist, von mindestens einer Applikation (121, 1 22) der Bedieneinheit (1) eine Leseanfrage für abgespeicherte Konfigurationsdaten entgegenzunehmen, auf abgespeicherte Konfigurationsdaten zuzugreifen und die der Leseanfrage entsprechenden abgespeicherten Konfigurationsdaten zu lesen und zur Konfiguration der mindestens einen Applikation (121, 122) die gelesenen Konfigurationsdaten an die mindestens eine Applikation (121, 122) zu übergeben.

2. Die Bedieneinheit (1) nach Anspruch 1, **dadurch gekennzeichnet, dass** das Konfigurationszugriffsmodul (15) eingerichtet ist, von mindestens einer Applikation (121, 122) eine Änderungsanfrage betreffend abgespeicherte Konfigurationsdaten entgegenzunehmen und auf abgespeicherte Konfigurationsdaten zuzugreifen und diese entsprechend der Änderungsanfrage zu ändern sowie einen Quittierbeleg über das Ändern der abgespeicherten Konfigurationsdaten an die mindestens eine Applikation (121, 122) zu übergeben.

3. Die Bedieneinheit (1) nach Anspruch 1 oder 2, weiter umfassend ein Überprüfungsmodul (16) welches eingerichtet ist, beim Zugriff auf abgespeicherte Konfigurationsdaten mit dem Konfigurationszugriffsmodul (15) und dem Synchronisationsmodul (14) zusammenzuwirken, wobei durch das Überprüfungsmodul (16) eines oder mehrere der folgenden Ereignisse detektiert und abgefangen werden:
zeitgleicher Zugriff auf abgespeicherte Konfigurationsdaten durch das Konfigurationszugriffsmodul (15) und durch das Synchronisationsmodul (14), fehlerhaftes Lesen und/oder fehlerhaftes Ändern von abgespeicherten Konfigurationsdaten.

4. Die Bedieneinheit (1) nach einem der Ansprüche 1 bis 3, weiter umfassend ein Master-Slavemodul (17) welches eingerichtet ist, die Bedieneinheit (1) als Master oder als Slave zu definieren, wobei das Synchronisationsmodul (14) eingerichtet ist, im Falle einer als Master definierten Bedieneinheit (1) die Synchronisation von Konfigurationsdaten ausschliesslich mit einer als Slave definierten örtlich entfernt angeordneten Bedieneinheit (1', 1 ") durchzuführen und im Falle einer als Slave definierten Bedieneinheit (1) die Synchronisation von Konfigurationsdaten ausschliesslich mit einer als Master definierten örtlich entfernt angeordneten Bedieneinheit (1', 1") durchzuführen.

5. Die Bedieneinheit (1) nach einem der Ansprüche 1 bis 4, **dadurch gekennzeichnet, dass** das Konfigurationszugriffsmodul (15) eingerichtet ist, beim Zugriff auf abgespeicherte Konfigurationsdaten zu überprüfen, ob der Zugriff den Konfigurationsdatenspeicher (13) der Bedieneinheit (1) oder einen Konfigurationsdatenspeicher (13', 13") einer örtlich entfernt angeordneten Bedieneinheit (1', 1") betrifft und den Zugriff auf abgespeicherte Konfigurationsdaten entsprechend im Konfigurationsdatenspeicher (13) der Bedieneinheit (1) oder in einem Konfigurationsdatenspeicher (13', 13") einer örtlich entfernt angeordneten Bedieneinheit (1', 1") durchzuführen.

6. Die Bedieneinheit (1) nach einem der Ansprüche 1 bis 5, **dadurch gekennzeichnet, dass** das Synchronisationsmodul (14) eingerichtet ist, zur Initialisierung des Konfigurationsdatenspeichers (13) der Bedieneinheit (1) von einem Konfigurationsdatenspeicher (13', 13") einer örtlich entfernt angeordneten Bedieneinheit (1', 1") abgespeicherte Konfigurationsdaten zu kopieren.

7. Die Bedieneinheit (1) nach einem der Ansprüche 1 bis 6, **dadurch gekennzeichnet, dass** das Konfigurationsdatenzugriffsmodul (15) eingerichtet ist, beim Ändern von abgespeicherten Konfigurationsdaten, welche das Löschen und/oder Modifizieren von abgespeicherten Konfigurationsdaten betrifft, eine Löschtabelle und/oder Modifikationstabelle nachzuführen, wobei das Synchronisationsmodul (14) eingerichtet ist, eine Synchronisation von abgespeicherten Konfigurationsdaten unter Berücksichtigung der Löschtabelle und/oder der Modifikationstabelle durchzuführen.

8. Ein Verfahren zum Betreiben einer Bedieneinheit (1) mit einer oder mehreren Applikationen (121, 122) zur Bedienung mindestens einer Produktionsanlage, umfassend:
Abspeichern von Konfigurationsdaten in einem Konfigurationsdatenspeicher (13) der Bedieneinheit (1), wobei die Konfigurationsdaten für die Konfiguration der einen oder mehreren Applikationen (121, 122) der Bedieneinheit (1) vorgesehen sind;
Zugreifen auf im Konfigurationsdatenspeicher (13) der Bedieneinheit (1) abgespeicherte Konfigurationsdaten und Synchronisieren dieser Konfigurationsdaten über eine Kommunikationsschnittstelle (11) der Bedieneinheit (1) mit Konfigurationsdaten, welche in einem Konfigurationsdatenspeicher (13', 13") einer örtlich entfernt angeordneten Bedieneinheit (1', 1 ") abgespeichert sind; und
Entgegennehmen, von mindestens einer Applikation (121, 122) der Bedieneinheit (1), einer Leseanfrage für abgespeicherte Konfigurationsdaten, Zugreifen auf abgespeicherte Konfigurationsdaten, um der Leseanfrage entsprechende abgespeicherte Konfigurationsdaten zu lesen und Übergeben von gelesenen Konfigurationsdaten an die mindestens eine Applikation (121, 1 22) der Bedieneinheit (1) zur Konfiguration der mindestens einen Applikation (121, 122).

9. Das Verfahren nach Anspruch 8, **dadurch gekennzeichnet, dass** von mindestens einer Applikation (121, 122) eine Änderungsanfrage betreffend abgespeicherte Konfigurationsdaten entgegengenommen wird und auf abgespeicherte Konfigurationsdaten zuzugreifen, um diese entsprechend der Änderungsanfrage zu ändern, wobei einen Quittierbeleg über das Ändern der abgespeicherten Konfigurationsdaten an die mindestens eine Applikation (121, 122) übergeben wird.

10. Das Verfahren nach Anspruch 8 oder 9, **dadurch gekennzeichnet, dass** beim Zugriff auf abgespeicherte Konfigurationsdaten eines oder mehrere der folgenden Ereignisse detektiert und abgefangen werden: zeitgleicher Zugriff auf abgespeicherte Konfigurationsdaten, fehlerhaftes Lesen und/oder fehlerhaftes Ändern von abgespeicherten Konfigurationsdaten.

11. Das Verfahren nach einem der Ansprüche 8 bis 10, **dadurch gekennzeichnet, dass** die Bedieneinheit (1) als Master oder als Slave definiert wird, wobei im Falle einer als Master definierten Bedieneinheit (1) die Synchronisation von Konfigurationsdaten ausschliesslich mit einer als Slave definierten örtlich entfernt angeordneten Bedieneinheit (1', 1") durchgeführt wird und im Falle einer als Slave definierten Bedieneinheit (1) die Synchronisation von Konfigurationsdaten ausschliesslich mit einer als Master definierten örtlich entfernt angeordneten Bedieneinheit (1', 1") durchgeführt wird.

12. Das Verfahren nach einem der Ansprüche 8 bis 11, **dadurch gekennzeichnet, dass** beim Zugriff auf abgespeicherte Konfigurationsdaten überprüft wird, ob der Zugriff den Konfigurationsdatenspeicher (13) der Bedieneinheit (1) oder einen Konfigurationsdatenspeicher (13', 13") einer örtlich entfernt angeordneten Bedieneinheit (1', 1 ") betrifft und der Zugriff auf abgespeicherte Konfigurationsdaten entsprechend im Konfigurationsdatenspeicher (13) der Bedieneinheit (1) oder in einem Konfigurationsdatenspeicher (13', 13") einer örtlich entfernt angeordneten Bedieneinheit (1', 1 ") durchgeführt wird.

13. Das Verfahren nach einem der Ansprüche 8 bis 12, **dadurch gekennzeichnet, dass** zur Initialisierung des Konfigurationsdatenspeichers (13) der Bedieneinheit (1) von einem Konfigurationsdatenspeicher (13', 13") einer örtlich entfernt angeordneten Bedieneinheit (1', 1") abgespeicherte Konfigurationsdaten kopiert werden.

14. Das Verfahren nach einem der Ansprüche 8 bis 13, **dadurch gekennzeichnet, dass** beim Ändern von abgespeicherten Konfigurationsdaten, welche das Löschen und/oder Modifizieren von abgespeicherten Konfigurationsdaten betrifft, eine Löschtabelle und/oder Modifikationstabelle nachgeführt wird und eine Synchronisation von abgespeicherten Konfigurationsdaten unter Berücksichtigung der Löschtabelle und/oder der Modifikationstabelle durchgeführt wird.

15. Ein Computerprogrammprodukt, umfassend ein greifbares, computerlesbares Speichermedium mit gespeichertem Computercode, welcher eingerichtet ist, einen oder mehrere Prozessoren einer Bedieneinheit (1) mit einer oder mehreren Applikationen (121, 122) zur Bedienung mindestens einer Produktionsanlage (2) so zu steuern, dass:
Konfigurationsdaten in einem Konfigurationsdatenspeicher (13) der Bedieneinheit (1) abgespeichert werden, wobei die Konfigurationsdaten für die Konfiguration der einen oder mehreren Applikationen (121, 122) der Bedieneinheit (1) vorgesehen sind;
auf im Konfigurationsdatenspeicher (13) der Bedieneinheit (1) abgespeicherte Konfigurationsdaten zugegriffen wird und diese Konfigurationsdaten über eine Kommunikationsschnittstelle (11) der Bedieneinheit (1) mit Konfigurationsdaten,
welche in einem Konfigurationsdatenspeicher (13', 13") einer örtlich entfernt angeordneten Bedieneinheit (1', 1 ") abgespeichert sind, synchronisiert werden; und
von mindestens einer Applikation (121, 122) der Bedieneinheit (1) eine Leseanfrage für abgespeicherte Konfigurationsdaten entgegengenommen wird, auf abgespeicherte Konfigurationsdaten zugegriffen wird, um der Leseanfrage entsprechende abgespeicherte Konfigurationsdaten zu lesen und gelesene Konfigurationsdaten an die mindestens eine Applikation (121, 122) der Bedieneinheit (1) zur Konfiguration der mindestens einen Applikation (121, 122) übergeben werden.
